# EUROPEAN PATENT SPECIFICATION

(11) **EP 2 202 342 B1**
(45) Date of publication and mention of the grant of the patent: **18.10.2017**
(21) Application number: 09180372.6
(22) Date of filing: 22.12.2009
(51) Int. Cl.: D06F 37/30

(54) **Cover-integrated slimtype stator and direct drive apparatus for use in a drum-washing machine**
Schmaler Stator mit integrierter Abdeckungsstruktur und Direktantriebsvorrichtung für Trommelwaschmaschine
Stator de type mince doté d'une structure de couvercle intégré et appareil à commande directe pour machine à laver à tambour

(30) Priority: 23.12.2008 KR 20080132125
(43) Date of publication of application: 30.06.2010
(73) Proprietor: Amotech Co., Ltd., 617 Namchon-dong, Namdong-gu Incheon 405-846 (KR)
(72) Inventor: Lee, Jong Hoon, 407-320 Incheon (KR); Lee, Nam Hun, 441-390 Gyeonggi-do (KR); Jeong, Kyu Hyuk, 427-040 Gyeonggi-do (KR)
(74) Representative: Grünecker Patent- und Rechtsanwälte PartG mbB

(56) References cited:
- EP-A2- 1 760 185
- WO-A1-95/08208
- DE-A1- 19 546 185

## Description

### BACKGROUND OF THE INVENTION

### 1. Field of the Invention

The present invention relates to a motor that is used for a drum-washing machine, and more particularly, to a slim type stator having a cover-integrated structure that is used to make a BLDC (Brushless Direct-Current) motor having a stator of a division core structure and a double rotor for use in a drum-washing machine, a slim type motor, and a direct drive apparatus having the same for use in the drum-washing machine.

### 2. Description of the Related Art

Document EP 1 760 185 A2 relates to a washing machine with a water tub and a spinning drum placed in the water tub, wherein a permanent magnet is adjusted onto the spinning drum and a stator interacting with the permanent magnet to generate a rotary power is integrated into a rear panel of the water tub. It is the disadvantage that during the assembly of the spinning drum into the water tub the drive apparatus comprising the permanent magnet and the stator might be damaged. Further, in case of a malfunction of the drive apparatus the complete tub or the complete drum must be replaced, which might increase considerably the cost of repair.

In general, a drum-washing system performs washing using a frictional force between a rotating drum and washes according to a delivered motor drive force, at a state where a detergent, cleaning water, and washes are engaged in a drum, to thereby cause few damages of washes, and prevent washes from getting tangled, and provide an effect of washing washes by striking and rubbing the washes.

Conventional drum-washing machines are classified into an indirect drive system in which a drive force of a motor is transferred to a drum indirectly through a belt that is wound between a motor pulley and a drum pulley, and a direct drive (DD) system in which a shaft that is connected to a rotor of a BLDC motor is connected directly to a drum, so that the motor drive force is immediately transferred to the drum.

Here, a belt-pulley drive system that does not transfer a drive force of a motor directly to a drum but transfers the motor drive force through a belt that is wound between a motor pulley and a drum pulley causes an energy loss during a transfer process of a drive force and generates much noise during a transfer process of power.

Therefore, to solve problems of such an existing drum-washing machine, use of a direct drive type drum-washing machine that uses a BLDC motor is being expanded.

Meanwhile, medium-size/small-size drum-washing machines of wash capacity of 5-8 Kg are being installed in a built-in system, in order to enhance an efficient practical use of an indoor residing space in Japan and Europe.

In this built-in system, size of a given installation space where a washing machine can be placed is usually established into a space of 600mm wide X 600mm long X 600mm high. When considering a wash capacity of a medium-size/small-size drum-washing machine, a space (length) where a drive apparatus can be established from a tub of the drum-washing machine to a rear housing of the drum-washing machine is determined into about 45mm.

In this case, the tub is elastically supported by a spring and a damper in the inside of a housing of a drum-washing machine so as to absorb impact at the time of a forward/backward rotational drive of a basket that is rotatably supported in the inside of the tub.

Therefore, in order to prevent the tub from being damaged when the tube moves back and forth, there is a need to secure a clearance space (length) of about 15-20mm. Accordingly, a space (length) where the drive apparatus can be installed is given into 25mm that is obtained by subtracting 20mm from 45mm.

In the built-in style drum-washing machine, the space (length) where the drive apparatus can be installed is narrow. As a result, the drive apparatus, that is, the drive motor that can satisfy the 25mm thickness condition has not been provided.

That is, a drive motor that has been developed up to the present is developed for use in a large-sized drum-washing machine of 63mm or more thick. Therefore, if the built-in style drum-washing machine is implemented in a direct drive (DD) system by using the large-sized drive motor, there is a problem of unavoidably having to reduce length of a tub to accordingly cause a decrease in a wash capacity.

Such being the case, a belt-pulley indirect drive system has been employed according to conventional art. That is, in the case of the conventional art, a motor should be disposed in the lower portion of a drum-washing machine, and a basket should be indirectly driven through a belt that is wound on a pulley, in order to avoid reducing of size of a tub. As a result, the conven tional drum- washing machine has a problem that a motor drive force is not well transferred to a drum. Therefore, to apply the motor to the drum-washing machine, a need to shorten size of the motor has increased.

Therefore, development of a slim type drive motor that can satisfy the 25mm thickness condition that can be employed in a direct drive (DD) system in a medium-size/small-size drum-washing machine that is of a wash capacity 5-8 Kg is required.

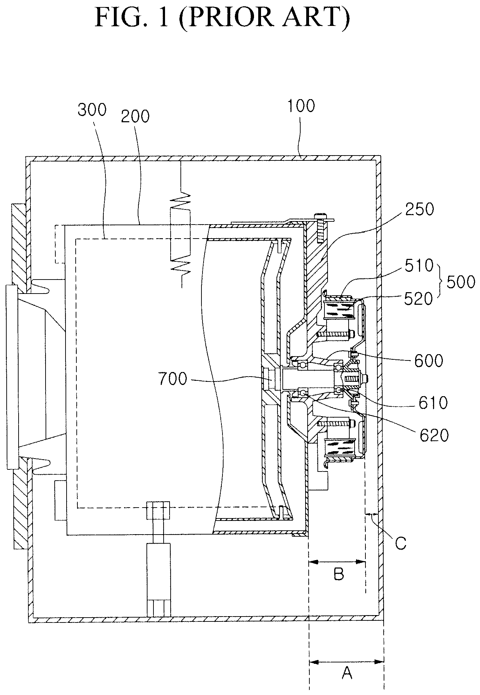

Hereinbelow, referring to accompanying FIG. 1, structure of a conventional direct drive type drum-washing machine that uses a BLDC motor and has been disclosed in Korean Laid-open Patent Publication No. 2005-12399 will be briefly described as follows.

FIG. 1 is a schematic diagram showing a conventional direct drive (DD) type drum-washing machine.

Referring to FIG. 1, a tub 200 is installed in the inner side of a cabinet 100, and a drum (or basket) 300 is rotatably installed at the center of an inner side of the tub 200. A motor 500 that makes the drum 300 rotate is installed in a support bracket 250 that is combined at the rear side of the tub 200.

The motor 500 includes: a drive shaft 700 that is rotatably combined with two upper/lower bearings 610 and 620 provided in a bearing housing 600 that is installed in a support bracket 250 that is opposed to the central portion of the rear surface of the tub 200; a core style stator 520 that forms a rotating magnetic field by laminating a number of iron cores, winding a coil on the laminated iron cores, and making electric current flow through the coil; and an outer mode rotor 510 that is formed by making magnets disposed on the outer circumference of the stator in which the rotor 510 is rotated by the rotating magnetic field that is formed by the stator 520 to thus make the drive shaft 700 rotate.

Here, the rotor 510 that forms the motor 500 is engaged with the center of the rear end of the drive shaft 700, and the stator 520 that is engaged with and fixed to the tub 200, that is, the rear wall of the support bracket 250 and that forms the motor 500 together with the rotor 510 is located in the inner side of the rotor 510.

If an operation button is pressed in order to drive a washing machine of FIG. 1, electric power is applied to the stator 520 of the motor 500, and thus a rotating magnetic field is generated in the stator 520. The rotating magnetic field is generated from the leading end of a winding portion (not shown) by the coil wound on the winding portion (not shown) of the stator 520. Accordingly, the rotor 510 that is close to the leading end of the winding portion (not shown) rotates according to the Fleming's left-hand rule.

Therefore, the drive shaft 700 that is combined with the upper and lower bearings 610 and 620 provided in the bearing housing 600 and the tub 200 is rotated by rotation of the rotor 510. As a result, the drum 300 performs a periodic reversal operation to thus wash laundry.

As described above, the conventional direct drive type drum-washing machine employs the motor 500 of the outer mode rotor structure. Thus, the motor 500 is installed in a space between the tub 200 and the rear surface of the drum-washing machine. Here, a rear space "A" from the tub 200 to the rear surface of the drum-washing machine is divided into a motor installation space "B" that is occupied by the motor 500 and a shaking space "C" of about 20mm of the tub 200.

By the way, the conventional motor 500 illustrated in FIG. 1 includes a number of cooling fins and cooling holes in the neighborhood of the tub side of the rotor 510, thereby cooling heat that is produced from the stator 520. A cooling fin structure that is extended into the inside of the motor in the conventional motor 500 and the support bracket 250 that is combined with the rear side of the tub 200 act as an obstacle factor to design a slim type motor, and are mainly used for a high-capacity (wash capacity of 10Kg) washing machine.

In general, a motor used as a drum drive apparatus of a washing machine includes a stator that is formed by winding coil on an integrally built-in type stator core or a division stator core that mostly uses a single outer mode rotor system, in order to get a big rotational inertial force.

Therefore, to design such a conventional outer mode rotor style drive motor into a slim type motor of 25mm thick that can be employed in a built-in drum-washing machine with a direct drive system, may have a problem of dissatisfying a driving torque that is required in a medium-size/small-size drum-washing machine having a wash capacity of 5-8Kg.

Meanwhile, a core style BLDC motor has a structure that a magnetic circuit is symmetrical to a radial direction around an axis, and thus generates less axial vibratory noise. Accordingly, the core style BLDC motor is suitable for low speed rotation. In addition, a portion where a gap occupies for direction of a magnetic path is few in the case of the core style BLDC motor. Accordingly, the core style BLDC motor can get a high flux density even if magnets of a low magnetic performance are used or a quantity of magnets are reduced. As a result, the core style BLDC motor has advantages of a big torque and a high efficiency.

However, such a core structure, that is, a yoke structure may cause a material loss of a yoke when manufacturing a stator. In addition, a special expensive dedicated winding machine should be used in order to wind coil on the yoke due to a complex structure of the yoke when mass-producing. In addition, a mold investment cost at stator manufacturing is high to thus cause a high facility investment cost, in the case of the core style BLDC motor.

In the core style AC or BLDC motor, especially the radial type core motor, it is a very important factor that decides competitive power of a motor to form the stator core into a perfect division type, since coil can be wound on division cores at a high efficiency using an inexpensive general-purpose winding machine. However, on the contrary, a low efficiency winding operation is performed using an expensive dedicated winding machine, in the case of an int egrally built-in type stator core. Accordingly, a manufacturing cost of a motor is heightened in the case of an integrally built-in type stator core.

It may cause a problem that does not form a perfect magnetic circuit when the stator core is combined with a single rotor, to form the stator core into a perfect division type in order to get an effectiveness of coil winding, in the case of the radial type core motor.

In this point of view, the same applicant as that of this invention proposed a BLDC motor that can form a stator core into a perfect division type by disclosing a double rotor/single stator structure of the radial core type in the Korean Laid-open Patent Publication No. 2004-0002349.

In the Korean Laid-open Patent Publication No. 2004-0002349, permanent magnet rotors are disposed in both inner and outer sides of a stator core. Accordingly, a flow of a magnetic path is formed by the inner and outer permanent magnets and the rotor yoke. As a result, it is possible to perform perfect division of the stator core, to thus propose a structure of greatly heightening productivity of the stator core and power of the motor by individual coil winding.

In addition, a schematic method of preparing an integrally built-in type stator was proposed in the Korean Laid-open Patent Publication No. 2004-0002349, in which a number of division core assemblies on which coils are wound according to division of cores and then the division core assemblies are molded in an annular form by an insert molding that uses a thermosetting resin.

However, a stator assembly structure/method of assembling a number of individual cores before insert molding, to thus perform an effective assembly when coils are mutually connected, was not proposed in the Korean Laid-open Patent Publication No. 2004-0002349.

Considering this point, a structure of greatly heightening productivity of stator assembly was proposed in the Korean Laid-open Patent Publication No. 2005-0000245, that includes: an annular core support plate that makes a number of division core assemblies on which coils are wound accommodated at a certain interval and supported in respective bobbins, and simultaneously a number of coils connected per phase; and an automatic position set/support unit that makes the division core assemblies automatically position set and supported at a certain interval.

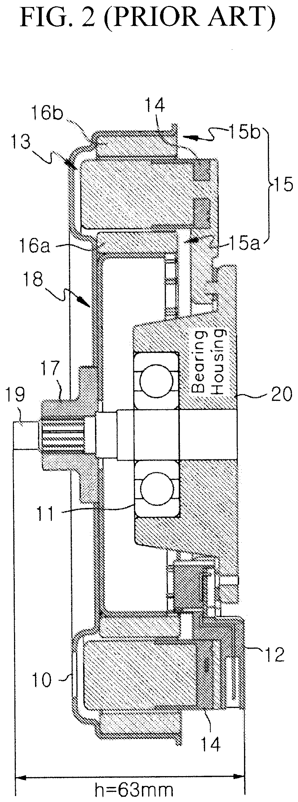

The above-described BLDC motor will be described in more detail with reference to FIG. 2.

Referring to FIG. 2, the BLDC motor includes: a stator 13 in which an inner circumference of a core support plate 14 is supported by various coupling units such as bolts/nuts in a housing 20 and a number of perfect division stator cores are assembled in an annular form with coils wound on an outer circumference of respective bobbins; a rotor 15 of a double rotor structure in which a number of magnets 16a and 16b are disposed in an annular form with respective magnetic gaps in the inner and outer circumferences of the stator 13, and thus an inner rotor 15a and an outer rotor 15b are supported by a yoke frame 18; and a rotating shaft 19 that is rotatably supported through a bearing 11 in the housing 20, and is connected through a bushing 17 at the center of the yoke frame 18.

The stator 13 is integrally formed in an annular form by insert molding using a thermosetting resin, at a state of temporarily assembling a number of stator core assemblies in the annular core support plate 14 with coils wound on an outer circumference of respective bobbins.

In FIG. 2 a reference numeral 12 denotes for example, a terminal block for supplying electric power for stator coils of a three-phase drive system, and a reference numeral 10 denotes a cooling hole.

In the case of the above-described motor, the core support plate 14 is arranged on the lower portion of the stator 13, to thus provide a connection space to connect between coils that are wound on the number of division stator cores. In addition, since the terminal block 12 for supplying electric power for motor coils is projected from a stator holder, the motor was produced thickly in which the whole thickness of the motor is about h=63mm as illustrated in FIG. 2. Also, since a drum diameter of the drum-washing machine is as large as 220-260mm in the case that the above-described motor is applied to a drum-washing machine, diameter of the annular core support plate should be also large in proportion to the drum diameter. As a result, the BLDC motor of FIG. 2 is very disadvantageous in view of a manufacturing cost and an assembly of the annular core support plate.

Since the whole thickness of the motor is thick as described above, it is required in order to make the motor thin that a number of stator cores on which coils are wound are integrated by insert molding using a thermosetting resin preferably without using the above-described annular core support plate.

Meanwhile, in the case of a large-size motor, a number of stator poles and a number of rotor poles are usually mixed. When the motor employs a division core system, a successive winding on cores of a number of group made of a number of division cores to then assemble the number of the division cores is desirable than an individual winding on a number of division cores to then assemble the number of the division cores, in view of assembly productivity.

The technology of manufacturing a motor by assembling a number of division cores without using any annular core support plate by this successive winding was disclosed in the Korean Patent Registration No. 663641 to the same applicant as that of this application.

In addition, the motor proposed in the above-described Korean Patent Registration No. 663641 cannot be applied as a slim type motor that can be employed in a direct drive type for a built-in type drum-washing machine, because connection of coils wound on a number of division cores is executed in the lower space of a stator, a terminal block for supplying electric power for motor coils is projected in a thickness direction from a stator holder, and an inner extension portion of a stator holder for coupling a housing (for example a tub) of a washing machine does not have a slim structure.

Moreover, a conventional motor for use in the drum-washing machine is exposed to an external portion of a tub, much noise is generated when driving the motor. Accordingly, it is undesirable that the conventional motor for use in the drum-washing machine is installed indoors in a built-in form.

In general, a tub having a mount surface on which a stator is assembled and installed is a large-size product that is manufactured in an injection molding method. As a result, since it is difficult to meet concentricity, tolerance may occur significantly.

However, in the case of a conventional drum-washing machine, a pair of support bearings are installed in a tub at intervals, to thus support a rotating shaft. As a result, a rotor is assembled on the rotating shaft, and a stator is assembled on the tub having a stator mount surface of significant tolerance. Thus, an error of an air gap between the rotor and the stator may occur as much as tolerance of concentricity between the rotating shaft and the tub.

For example, if an error of 0.5mm occurs when the air gap is set to be 1mm, an air gap at one side is reduced to 0.5mm, an air gap at a point facing the one side may increase at 1.5mm.

Thus, if an error of the air gap occurs between the rotor and the stator, a non-uniform electromagnetic force is generated at both point of places that face each other during rotation of the rotor, to thus cause vibration. The vibration noise becomes an obstacle factor particularly with respect to a built-in type low noise washing machine.

To overcome inconveniences of the conventional art, it is an object to provide a direct drive apparatus for use in a built-in type drum-washing machine that is installed in an allowable 25mm space without reducing size of a tub that relates with a wash capacity in a built-in type medium-size/small-size drum-washing machine, to thereby make a basket in the inside of the tub rotate in a direct drive mode, and has a low-noise type cover-integrated stator.

It is another object to provide a cover-integrated stator and a direct drive apparatus for use in a drum-washing machine using the cover-integrated stator, in which a rotating rotor is disposed in the inside of a motor and the stator that faces the rotor is disposed in the outside of the motor in a cover-integrated structure, to thus realize low noise and simultaneously a slim structure.

It is still another object to provide a cover-integrated stator and a direct drive apparatus for use in a drum-washing machine using the cover-integrated stator, in which a rotating rotor is disposed in the inside of a motor and the stator that faces the rotor is disposed in the outside of the motor in a cover-integrated structure, and simultaneously a bearing for supporting a rotating shaft is incorporated in the stator, to thus reduce the number of the rotating shaft support bearing into one, and to thereby realize thickness of a rear surface of a tube in a slim structure.

It is yet another object to provide a direct drive apparatus for use in a washing machine in which one end of a rotating shaft is supported by a rotating shaft support bearing that is incorporated in a stator, to thereby enable both a rotor and the stator to be assembled on the basis of the rotating shaft and to thus establish an air gap between the rotor and the stator uniformly.

It is yet still another object to provide a direct drive apparatus for use in a drum-washing machine, in which a bushing of a rotor that is coupled with a rotating shaft is disposed at the center portion of a motor, and an outer surface of a stator is designed to have no protrusions, to thereby minimize an axial length (that is, thickness) of the motor.

It is a further object to provide a slim type stator that can be manufactured in a slim type, and a direct drive apparatus for use in a drum-washing machine using the slim type stator, in which coils are successively wound on a number of division stator cores per phase of U, V, and W, to accordingly omit connection works between a number of division core assemblies on which coils are wound per phase, and a temporary assembly between adjoining division core assemblies is performed by using a coupling between bobbins in order to perform a molding work with a thermosetting resin, to thereby remove a PCB (Printed Circuit Board) for assembling the division cores.

It is another further object to provide a direct drive apparatus for use in a drum-washing machine that can be manufactured in a slim type, in which a space factor of coils between adjoining division cores is lowered by increasing diameter of a motor and the number of slots and poles in a stator and a rotor, and a terminal assembly holder and a terminal housing that connect a three-phase coil terminal with an electric power terminal block are disposed in a space between the secured cores, to thereby minimize height of the terminal block.

It is a still further object to provide a slim type motor for use in a direct drive mode that is appropriate for driving a drum-washing machine that operates in a quick inversion method since an efficiency of the motor is high and a drive torque of the motor is high, by employing a double-rotor structure that is a slim structure and does not reduce size of magnets.

It is a yet further object to provide a slim type motor in which the slim type motor can be applied for the drum-washing machine although a slant angle of a slant drum-washing machine is made large by minimizing an axial length of the motor, thereby lowering the whole height of the motor, and thereby increasing an outer diameter of the motor.

It is a yet still further object to provide a direct drive apparatus for use in a drum-washing machine having an outer-stator structure that enables a top loading drive, in which a hall sensor is inserted in the inside of a stator and magnets that are sensed by the hall sensor are attached to the outside of a rotating rotor, to thereby control a stop position of a motor.

It is the objective technical problem of the present invention to provide a low noise type stator that is applied to a drive apparatus for use in a drum-washing machine, as well as to provide a low noise direct drive apparatus for use in a drum-washing machine, wherein the drive apparatus can be easily and quickly assembled with the washing machine.

This problem can be solved by the subject matter of claim 1 as well as by the subject matter of independent claim 5. Improved embodiments of the invention are provided by the subject matter of the dependent claims.

To achieve the object of the present invention, according to the present invention, there is provided a stator having a cover-integrated structure that is applied to a direct drive apparatus for use in a drum-washing machine, the slim type stator comprising:
a division stator core assembly in which coils are successively wound per phase on a number of division cores on respective outer circumferences of which bobbins are formed and adjoining division core bobbins are mutually coupled with each other and assembled in an annular form; and
a stator holder that is selectively formed on and integrated with the outer portion of the division type stator core assembly,
wherein the stator holder further comprises: an inner extension portion that is axially extended and to the center of gravity of which one end of a rotating shaft is rotatably supported; and an outer extension portion that is extended forwards from the outer circumference of the stator holder and that is fixedly combined with a tub of the drum-washing machine, so as to form a cover surrounding a rotor.

According to the invention, the stator holder and the outer extension portion form a cover surrounding a rotor that is disposed between the stator and the tub.

Preferably but not necessarily, the stator holder further comprises a support bearing that rotatably supports one end of a rotating shaft that is coupled with the rotor to the center of gravity of the inner extension portion that is axially extended from the outer side of the stator.

Preferably but not necessarily, the slim type stator further comprises a terminal assembly holder that comprises: first through third terminal housings that are arranged between the division stator cores on which the three-phase coils are respectively wound and that are used to connect respective one-side coil terminals of the three-phase coils and respective outer withdrawal lead wires of the there phases; and a common terminal housing that is used to form a neutral point by inter-connecting the other-side coil terminals of the respective three-phase coils.

Preferably but not necessarily, the respective bobbins further comprise first and second coupling protrusions at the center of the lower end of the first and second flanges, and wherein the terminal assembly holder further comprises coupling holes that are combined with and fixed to the first and second coupling protrusions, respectively.

Preferably but not necessarily, the coils wound on the division stator cores are made of copper (Cu) or aluminum (Al).

According to another aspect , there is provided a direct drive apparatus for use in a drum-washing machine, the direct drive apparatus comprising:
a rotating shaft whose one end is rotatably combined with a tub of the drum-washing machine and on the leading end of which a basket is fixedly combined;
a double-rotor comprising inner and outer rotors in which a number of N-pole and S-pole magnets are alternately disposed on different concentric circles in an annular form and the magnets opposing each other and having a predetermined distance between the inner/outer portions are disposed to have a mutually reverse polarity, and a rotor holder that connects respective one end of the inner and outer rotors and simultaneously whose inner circumference is located at the center of gravity of the rotor, and that is extended and formed in a bushing combined with the rotating shaft; and
a stator that integrates a division stator core assembly that is assembled in an annular form by a stator holder, by winding three-phase coils successively and alternately on a number of division stator cores on an outer circumference of each of which an insulation bobbin is integrally formed, and whose leading end is disposed between the inner rotor and the outer rotor,
wherein the stator holder further comprises: an inner extension portion that is axially extended and to the center of gravity of which the other end of the rotating shaft is rotatably supported; and an outer extension portion that is extended forwards from the outer circumference of the stator holder and that is fixedly combined with the tub of the drum-washing machine, so as to form a cover surrounding a rotor.

Preferably but not necessarily, in this aspect, each bobbin comprises first and second flanges that are molded on the outer circumference of the respective division stator cores and surround a middle portion thereof, and formed at one side of the bobbin and the other side thereof, respectively, and a coupling protrusion and a coupling groove are respectively formed at either side end of the first flange that is disposed at the inside of the stator core assembly during assembling the stator core assembly, wherein adjoining division stator core bobbins are coupled by mutually coupling the coupling protrusion with the coupling groove, to thus be disposed in an annular form.

Preferably but not necessarily, in this aspect, the slim type stator further comprises a terminal assembly holder that comprises: first through third terminal housings that are arranged between the division stator cores on which the three-phase coils are respectively wound and that are used to connect respective one-side coil terminals of the three-phase coils and respective outer withdrawal lead wires of the there phases; and a common terminal housing that is used to form a neutral point by inter-connecting the other-side coil terminals of the respective three-phase coils.

Preferably but not necessarily, in this aspect, the direct drive apparatus further comprises: a first support bearing that is installed in the tub and supports one end of the rotating shaft; and a second support bearing that is installed at the center of gravity of the inner extension portion of the stator holder and rotatably supports the other end of the rotating shaft.

Preferably but not necessarily, in this aspect, the direct drive apparatus further comprises: a magnetic member that is installed on the outer circumferential surface of the rotor; and a hall sensor that is installed in the inside of the outer extension portion of the stator holder and generates a signal that detects position of the magnetic member, to thereby perform a top loading drive.

To achieve the objective technical problem of the present invention, according to the present invention, there is provided a direct drive apparatus for use in a drum-washing machine, the direct drive apparatus comprising:
a rotating shaft whose one end is rotatably combined with a tub of the drum-washing machine and on the leading end of which a basket is fixedly combined;
a rotor at the center portion of which the rotating shaft is combined; and
a stator in which a stator holder is formed on the outer circumference of a stator core assembly that is assembled in an annular form by winding coils on a number of division cores on an outer circumference of each of which an insulation bobbin is integrally formed, and that enables the rotor to be rotationally driven,
wherein the stator holder further comprises: an inner extension portion that is axially extended and to the center of gravity of which the other end of the rotating shaft is rotatably supported; and an outer extension portion that is extended forwards from the outer circumference of the stator holder and that is fixedly combined with the tub, so as to form a cover surrounding the rotor.

Preferably but not necessarily, the rotor has one of a double-rotor structure, an inner rotor structure, and an outer rotor structure.

According to a yet another aspect, there is provided a slim type motor having a cover-integrated stator, the slim type motor comprising:
a rotating shaft that is rotatably combined with a housing of an apparatus and on the leading end of which a driven object is fixedly combined;
a double-rotor comprising inner and outer rotors in which a number of N-pole and S-pole magnets are alternately disposed on different concentric circles in an annular form and the magnets opposing each other and having a predetermined distance between the inner/outer portions are disposed to have a mutually reverse polarity, and a rotor holder that connects respective one end of the inner and outer rotors and simultaneously whose inner circumference is located at the center of gravity of the rotor, and that is extended and formed in a bushing combined with the rotating shaft; and
a stator that integrates a division stator core assembly that is assembled in an annular form by a stator holder, by winding three-phase coils successively and alternately on a number of division stator cores on an outer circumference of each of which an insulation bobbin is integrally formed, and whose leading end is disposed between the inner rotor and the outer rotor,
wherein the stator holder further comprises: an inner extension portion that is axially extended and to the center of gravity of which the other end of the rotating shaft is rotatably supported; and an outer extension portion that is extended forwards from the outer circumference of the stator holder and that is fixedly combined with the tub of the drum-washing machine, so as to form a cover surrounding a rotor.

Preferably but not necessarily, in this aspect, the housing of the apparatus is a tub for use in a drum-washing machine and the driven object is a basket.

The above and/or other aspects of the present invention will become apparent and more readily appreciated from the following description of the exemplary embodiments, taken in conjunction with the accompanying drawings in which:
FIG. 1 is a schematic diagram showing a conventional direct drive type drum-washing machine;
FIG. 2 is a cross-sectional view of a motor that is formed by assembling a number of division core assemblies on a core support plate;
FIG. 3A is a cross-sectional view cut along the axial direction of a drum-washing machine that is combined with a slim type motor according to an embodiment of this invention;
FIG. 3B is an exploded perspective view of FIG. 3A;
FIG. 4 is a perspective view of a division stator core used in a slim type motor according to this invention;
FIG. 5A is a front view of the division stator core of FIG. 4, and FIG. 5B is a cross-sectional view cut along a line B-B of the division stator core of FIG. 4;
FIG. 6 is a perspective view for explaining a coupling state of the adjoining division stator cores;
FIG. 7 is a perspective view of a division stator core assembly that is completed by assembling a number of division stator cores in an annular form;
FIG. 8 is a perspective view for explaining a terminal assembly holder that is disposed in the completed division stator core assembly;
FIG. 9 is a conceptual diagram for explaining a coil winding configuration and connection state of a three-phase drive system for the division stator core assembly of FIG. 8;
FIG. 10A is a reference perspective view for explaining a U-phase terminal that is assembled with the terminal assembly holder of FIG. 8;
FIG. 10B is a reference perspective view for explaining a common terminal that is assembled with the terminal assembly holder of FIG. 8;
FIGs. 11A and 11B are a perspective view and a top plan view of a stator that is used in a slim type motor according to this invention, respectively; and
FIGs. 12A and 12B are a perspective view and a bottom plan view of a rotor that is used in a slim type motor according to this invention, respectively.

Hereinbelow, a slim type stator having a cover-integrated structure that is used to make a BLDC (Brushless Direct-Current) motor having a stator of a division core structure and a double rotor for use in a drum-washing machine, a slim type motor, and a direct drive apparatus having the same for use in the drum-washing machine will be described with reference to the accompanying drawings.

Thickness (or height) of a slim type motor according to an embodiment of this invention is implemented to be about 25mm or below so that the slim type motor is adapted to be employed in a narrow motor installation space in a direct drive apparatus for use in a medium-size/small-size built-in type drum-washing machine or another apparatus that needs a motor. In particular, the present invention provides a motor having an outer-stator structure in which a stator is disposed in the outside of the motor and simultaneously has a cover-integrated structure.

The slim type motor according to the embodiment of this invention has a slim structure and generates a high driving torque that is suitable in a quick inversion mode drive of a drum-washing machine. In addition, the slim type motor according to the embodiment of this invention employs a double rotor structure that does not reduce size of magnets comparing with the conventional art, considering a coil winding workability by perfect division of a stator core. As a result, a magnetic circuit of the motor is designed into a double-rotor/single-stator structure that circulates a "inner rotor-division core-outer rotor-adjoining division core".

In addition, a stator according to an embodiment of this invention is of a division core structure that can be manufactured in a slim type, in order to obtain a slim thickness, in which coils are successively wound on a number of division stator cores per phase of U, V, and W, to accordingly omit connection works between a number of division core assemblies on which coils are wound per phase, and a temporary assembly between adjoining division core assemblies is performed by using a snap coupling between bobbins in order to perform a molding work with a thermosetting resin, without using any PCB (Printed Circuit Board) or supporter necessary for assembling the division cores.

In general, as the number of poles of a motor becomes large, the number of rotations (rpm) becomes low, as in the present invention. The drum-washing machine does not require a high number of rotations (rpm). However, the smaller number of coils are wound on respective stator cores.

Considering this point, the present invention a slim type stator of a division core structure that can be manufactured in a slim type, in which a space factor of coils between adjoining division cores is lowered by increasing diameter of a motor and the number of slots and poles in a stator and a rotor, and a terminal assembly holder and a terminal housing that connect a three-phase coil terminal with an electric power terminal block are disposed in a space between the secured cores, to thereby minimize height of the terminal block.

Moreover, in this invention, a bushing of a rotor that is combined with a rotating shaft of a motor and an inner extension portion of a stator that is combined with a tub are disposed at the center of gravity of the motor and its circumference, to thereby intercept thickness of the motor from increasing to the axial direction of the motor.

In addition, the present invention enables a stator to be used a cover for a motor, to thus realize a low-noise structure that is desirable for a built-in type drum-washing machine, and does not need a separate cover to thus contribute to make a slim type motor. In addition, the present invention enables a hall sensor to be installed at the inside of a stator and magnets to be installed at the outer side of a rotor corresponding to the hall sensor, so as to perform a top loading drive.

Hereinbelow, preferred embodiments of the present invention will be described in detail with reference to the accompanying drawings.

### A. Overall structure of the motor

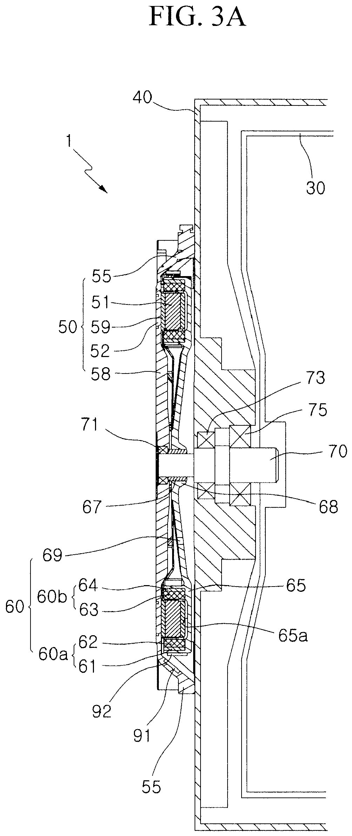

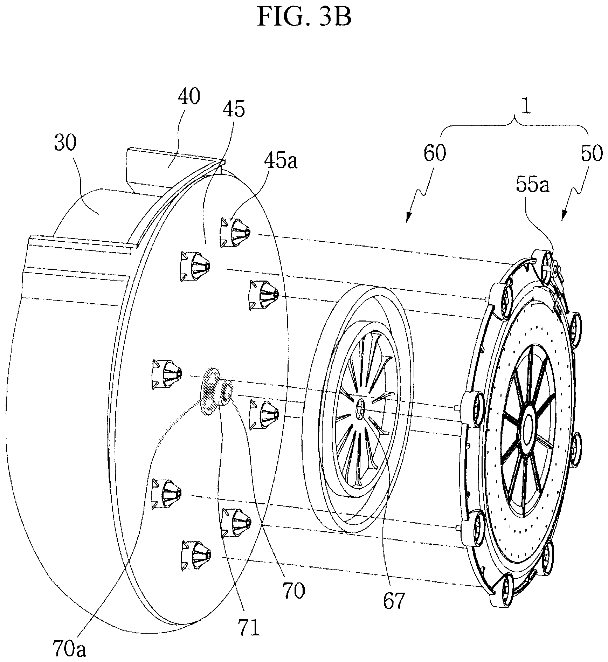

FIG. 3A is a cross-sectional view cut along the axial direction of a drum-washing machine that is combined with a slim type motor according to an embodiment of this invention, and FIG. 3B is an exploded perspective view of FIG. 3A.

Referring to FIG. 3A, a slim type motor 1 is installed on the rear surface of a tub 40 in a medium-size/small-size built-in drum-washing machine to then be used to rotationally drive a basket 30 that is positioned in the tub in a forward/backward direction. In addition, the slim type motor 1 may be also applied to another apparatus other than a washing machine.

The slim type motor 1 according to this invention includes: a stator 50 that is integrally formed by an annular stator holder 52 that is manufactured by winding coils 59 on the outer circumference of bobbins (not shown) and then insert molding a number of division stator cores 51 using a thermosetting resin; a rotor 60 that includes an inner rotor 60a in which a number of magnet 63 and a ring-shaped yoke 64 are disposed in an annular form, with a predetermined magnetic gap in the inner and outer circumference portions of the stator 50, an outer rotor 60b in which a number of magnets 62 and a ring-shaped outer yoke 61 are disposed in an annular form, and a rotor support frame 65 that mutually connects one end of the inner rotor 60a and one end of the outer rotor 60b and is extended to the central portion of the rotor to then be combined with an involute serration bushing 67; and a rotating shaft 70 that is combined with the rotor 60 at the central portion of the rotor 60, for example, through the involute serration bushing 67, and whose one end is rotatably supported through a bearing 71 that is integrally installed in the stator 50 and whose other end is rotatably supported through at least one of bearings 73 and 75 that are installed on the tub 40.

The stator 50 is formed by integrally molding a number of division stator cores 51 that have been perfectly divided in an annular form by an annular form stator holder 52. In the stator holder 52, an inner extension portion 58 is extended inwards and is coupled with the bearing 71 and the rotating shaft 70 is rotatably supported to the bearing 71.

As shown in FIGs. 3A and 3B, the stator 50 is disposed at the outer side of the motor 1 according to the present invention. The motor 1 according to the present invention has an outer-stator structure that the rotor 60 is disposed at the inner side of the motor 1. An outer extension portion 55 that forms an annular cover that is engaged with the tub 40 of a washing machine along an annular outer circumference thereof is extended and formed in the stator 50.

Therefore, the motor 1 according to this invention may not require a separate motor cover since the stator 50 plays a role of a cover simultaneously, to thus enable the motor 1 to be made in a slim structure. In addition, the motor 1 according to this invention enables a low-noise structure that is desirable for a built-in type washing machine.

The stator 50 is formed by integrally molding a number of perfectly divided stator cores 51 in an annular form by an annular stator holder 52. The stator holder 52 is fixed to the tub 40 of a washing machine by an outer extension portion 55 whose outer circumference is extended forwards.

In this case, the rotor 60 is connected with the bushing 67 that is disposed at the substantial center of gravity of the rotor by the bushing holder 68 that is extended from the rotor support frame 65, to thus make the rotational force transferred to the rotating shaft 70. The rotating shaft 70 is rotatably supported by the bearings 71, 73 and 75 that are disposed at the center of the stator folder 52 and at the center of the tub 40, respectively. In addition, a basket 30 that is rotatably supported in the inside of the tub 40 and accommodates washes is combined in the leading end of the rotating shaft 70. The basket 30 is rotationally driven according to operation of the motor 1.

Here, when the slim type motor is used in a drive apparatus for a large-capacity washing machine, it may be designed into a 27-slot-24-pole or 27-slot-36-pole structure, for example. However, the slim type motor according to the present invention is designed to have diameter of the motor relatively greatly increased and thus have a 36-slot-36-pole structure, for example, in order to lower a space factor of coils with respect to a stator. Accordingly, the slim type motor according to the present invention is designed to have a structure of having increased the number of cores of the stator and the number of magnets of the rotor.

Therefore, the inner rotor 60a and the outer rotor 60b of the double rotor 60 are attached on the inner and outer side surfaces of inner and outer yokes 64 and 61 that are formed of forty-eight (48) magnets 63 and 62 in an annular form, respectively. The built-in type stator 50 including division stator cores 51 around which thirty-six (36) coils are wound is inserted into an annular space between the double rotor 60.

Therefore, the motor 1 according to the present invention is formed of a radial core type BLDC (Brushless Direct-Current) motor that is composed of the double rotor 60 in which the inner rotor 60a and the outer rotor 60b are supported to the rotor support frame 65 and the single stator 50.

Meanwhile, when the above-described motor 1 is applied to a drum-washing machine that is driven in a top loading style, a hall sensor 91 is inserted in the inside of a stator 50 and magnets 92 that are sensed by the hall sensor 91 are installed at the outside of a rotating rotor 60 corresponding to the stator 50. Thus, in order to perform a top loading drive, positions of the magnets 92 are sensed by the hall sensor 91 and determines a wash input/output stop position of the basket 30. Accordingly, the drum-washing machine that employs the above-described motor 1 can perform a top loading drive. Here, a detection signal of the hall sensor 91 is a signal that is detected from the hall sensor 91 in a motor drive control ler (not shown) with out using a separate signal sensing controller (not shown). It is possible to control drive of the motor 1 with the detection signal of the hall sensor 91.

FIG. 3B is an exploded perspective view of a drum-washing machine and a slim type motor. In the drum-washing machine, the basket 30 is disposed in the inside of the tub 40, and a disc-shaped support bracket 45 is coupled on the rear surface of the tub 40 by using a number of fixing screws or bolts/nuts, so as to be easily coupled with the motor 1 that is a basket drive.

In addition, a number of, that is, eight coupling fixing protrusions 45a are protruded on the outer side surface of the support bracket 45. Eight coupling fixing portions 55a are integrally formed on the outer side extension portion 55 of a stator 50 corresponding to the support bracket 45, in the same n umber as that of the coupling fixing prot rusions 45a. Thus, the stator 50 is fixed on the rear surface of the tub 40 by engaging the coupling fixing protrusions 45a with fixing bolts.

Therefore, if the support bracket 45 is coupled and fixed on the rear surface of the tub 40 when the motor 1 is assembled with the tub 40 in this invention, one end of the rotating shaft 70 is connected with the basket 30, an intermediate portion of the rotating shaft 70 is rotatably supported by bearings 73 and 75 that are installed in the tub 40, and the other end of the rotating shaft 70 is externally protruded.

Thereafter, a bushing 67 of a rotor 60 is assembled to a serration portion 70a of the protruded rotating shaft 70, so that the former is coupled with the latter. Next, if the fixing bolts are engaged with the coupling fixing portions 55a of the outer side extension portion 55, the coupling fixing portions 55a are fixed to the coupling fixing protrusions 45a of the support bracket 45. Accordingly, the stator 50 is fixed on the rear surface of the tub 40, and the other end of the rotating shaft 70 is rotatably supported by a bearing 71 that is installed in the stator 50.

Therefore, in this invention, the stator 50 is disposed in the outside of the rotor 60 in a cover-integrated structure, and simultaneously the rotating shaft support bearing 71 is incorporated in the stator 50. Accordingly, it is possible to reduce the number of the rotating shaft support bearings 73 and 75 from two to one. As a result, thickness of the rear surface of the tub 40 can be slimmed as much as thickness of at least one bearing.

In addition, as described above, the rotor 60 and the stator 50 can be assembled on the basis of the single rotating shaft 70 by making one end of the rotating shaft 70 supported to the rotating shaft support bearing 71 that is incorporated in the stator 50. As a result, the present invention can uniformly establish air gaps between the inner rotor 60a and the outer rotor 60b, and the stator 50, to thus solve vibration noise that has been caused by non-uniformity of the air gaps.

Moreover, in the case that a stator is engaged with a tub by bolts in an outer-rotor system according to the conventional art, the tub or a support bracket is forced to receive a force by an electromagnetic force that is generated when electric power is applied to coils of the stator, to accordingly cause transformation and damage by stress.

However, in the case that the rotating shaft 70 is supported by the rotating shaft support bearing 71 incorporated in the stator 50 as described above according to the present invention, the transformation and damage of the tub or support bracket by stress may be reduced, to accordingly prevent distortion and have an advantageous structure of supporting the rotating shaft 70 by dispersing loads that are generated during rotation of the rotor.

### B. Structure of stator and process of manufacturing the stator

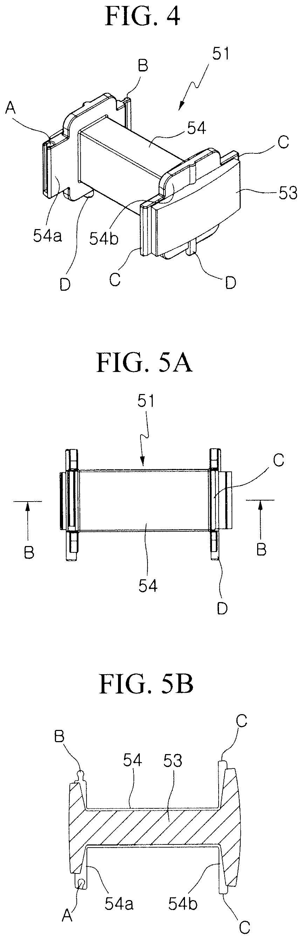

FIG. 4 is a perspective view of a division stator core used in a slim type motor according to this invention, and FIGs. 5A and 5B are a front view and a cross-sectional view of the division stator core of FIG. 4, respectively.

Referring to FIGs. 4, 5A and 5B, a division stator core 51 may be configured in an 1-shaped form, for example, and is formed by winding a coil (not shown) on the outer circumference of an insulation bobbin 54 at a state of integrally forming the insulation bobbin 54 surrounding an inner division core 53 in an 1-shaped form. Then, an annular built-in type stator 50 of FIG. 3 is obtained by assembling a number of division stator cores 51 in an annular form, and then insert molding the outer side surfaces of the number of the division stator cores 51 using a thermosetting resin. Copper (Cu) is usually used as a material of the coil. However, aluminum (Al) whose specific gravity is one third in comparison with Cu and whose price is relatively inexpensive can be used, in order to reduce weight of the motor. In general, it is hard to apply aluminum (Al) as a motor coil because an oxidation problem occurs in aluminum. However, such an oxidation problem does not occur in the present invention since the outer portions of stator core assemblies on which coils are wound are coated by using the thermosetting resin.

Also, the division core 53 can be used by laminating a number of silicon steel plates or sintering a soft magnetic compound whose magnetic permeability is high and whose electrical resistance is high, in order to prevent a magnetic flux from being lost by an eddy current that can be generated at the time of rotation of a motor.

The 1-shaped bobbin 54 is composed of an intermediate rectangular vessel portion on which a coil is wound, and inner and outer flanges 54a and 54bs that are bent and extended at the inner and outer portions of the rectangular vessel portion, respectively. The rectangular vessel portion formed between the inner and outer flanges 54a and 54bs provides a space on which a coil is wound. Here, since the outer flange 54b is disposed in the outside of the stator, it is preferable that the inner and outer flanges 54a and 54bs of the bobbin 54 should be formed so that the outer flange 54b is formed relatively larger than the inner flange 54a.

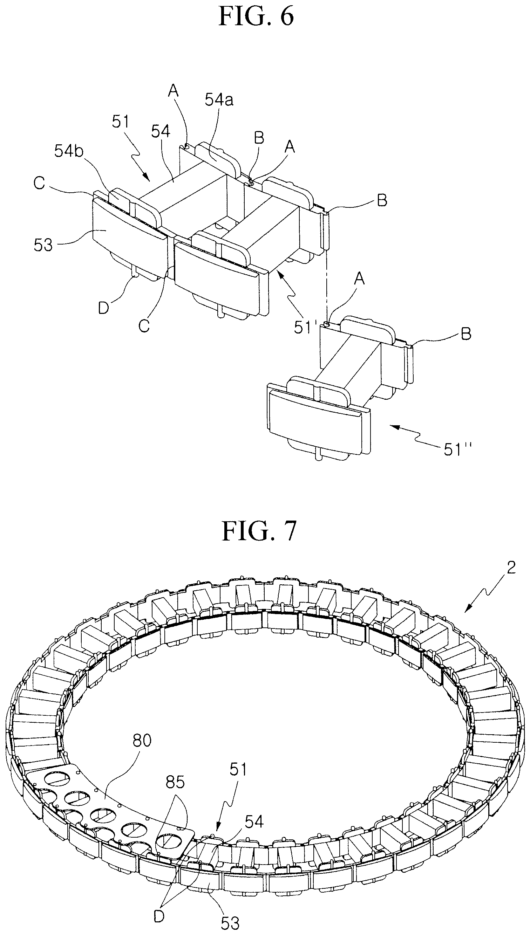

The division stator core 51 includes a coupling groove A and a coupling protrusion B that are perpendicularly formed on both sides thereof to then be coupled between the inner circumferences of the inner flange 54a so that a number of the division stator cores 51 can be assembled in an annular form at a later time. The outer circumference of the outer flange 54b is formed by making circumference forming surfaces C of the outer flange 54b come in contact with those of the adjoining outer flange 54b. A pair of coupling protrusions D for assembling a terminal assembly holder 80 of FIG. 7 are provided in the lower portions of the inner and outer flanges 54a and 54b of the bobbin 54, respectively.

FIG. 5A is a front view of the division stator core 51, and FIG. 5B is a cross-sectional view of the division stator core 51 that is cut along a line B-B of FIG. 5A.

Referring to FIG. 5B, it can be seen that the 1-shaped division core 53 is inserted into the inside of the division stator core 51, and the bobbin 54 that surrounds the outer circumference portion of the core is formed along the outer circumference portion of the core. The coupling groove A and the coupling protrusion B are formed in the inner flange 54a of the bobbin 54, and the circumference forming surfaces C are formed in the outside flange 54b thereof.

It is preferable that an assembly between the 1-shaped division core 53 and the bobbin 54 is integrally formed by an insert molding method that uses a thermosetting resin, but is not limited thereto. That is, the assembly between the 1-type division core 53 and the bobbin 54 may be assembled by another known method.

A method of manufacturing an annular built-in type stator 50 by assembling a number of division stator cores 51 will be described below.

FIG. 6 is a perspective view for explaining a coupling state of the division stator core of FIG. 4, and FIG. 7 is a perspective view of a completed division stator core assembly that is formed by assembling the division stator cores shown in FIG. 4 in an annular form.

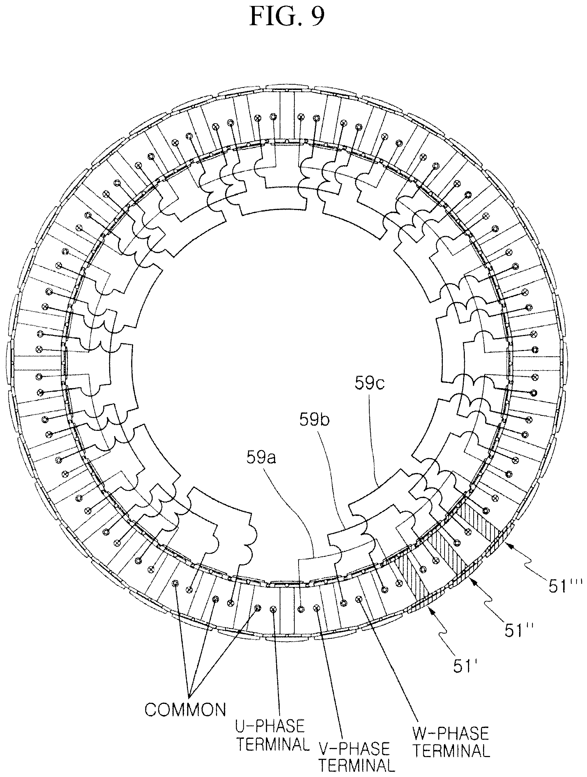

Hereinbelow, for convenience of explanation, states that coils are not wound on the division stator cores have been illustrated, but it is apparent that coils of three phases U, V, and W should be wound on the division stator cores at the time of manufacturing the stator 50 by an actual insert molding method. The three-phase coils and connection of the three-phase coils will be described below with reference to FIG. 9.

Referring to FIGs. 6 and 7, a coupling protrusion A is formed at one side of the inner flange 54a of a bobbin 54 of each division stator core 51, and a coupling groove B is formed at the other side thereof. The circumference forming surfaces C are formed in the outside flange 54b thereof. The inner circumference surface of each division stator core 51 is formed as the coupling protrusion B of the division stator core 51 is coupled with the coupling groove A of the adjoining division stator core 51'. If the inner circumference surfaces of the adjoining division stator cores 51 and 51' are coupled with each other, the circumference forming surfaces C of two division stator cores 51 and 51' come in contact with each other to thus form an outer circumference surface.

In this manner, if the coupling protrusion and the coupling groove A of the bobbin 54 in each division stator core 51 are consecutively mutually coupled with each other, a division stator core assembly 2 is completed as illustrated in FIG. 7.

Referring to FIG. 7, a bottom surface of a completed division stator core assembly that is formed by assembling the division stator cores shown in FIG. 4 in an annular form is illustrated in a perspective view, in which the inner circ umference surfaces of the adjoining division stator cores are coupled by coupling the coupling groove A with the coupling protrusion B, and the outer circumference surface is formed by the circumference forming surfaces C that come in contact with each other.

A terminal assembly holder 80 for connecting coils is combined with a part of the bottom surface of the division stator core assembly 2. A pair of coupling protrusions D that are provided at both ends of the lower portion of the inner and outer circumference surfaces of the division stator core 51 are combined with coupling holes 85 of the terminal assembly holder 80, respectively.

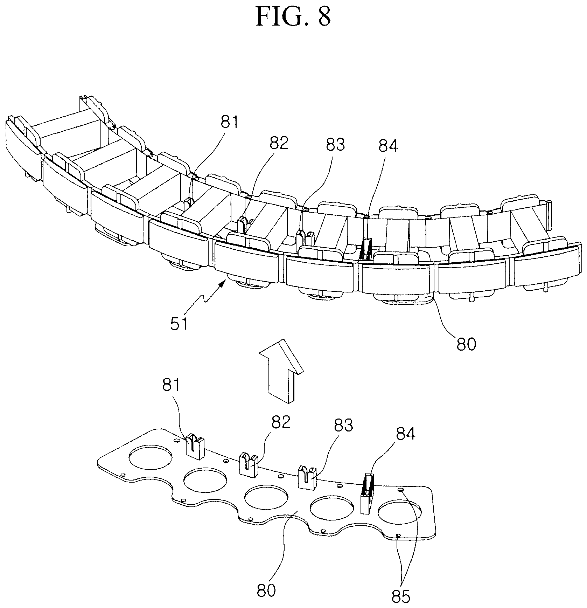

FIG. 8 is a perspective view for explaining a terminal assembly holder that is disposed in the completed division stator core assembly, and FIG. 9 is a conceptual diagram for explaining a state where coils are wound on the division stator core assembly of FIG. 8 and are withdrawn to the terminal assembly holder.

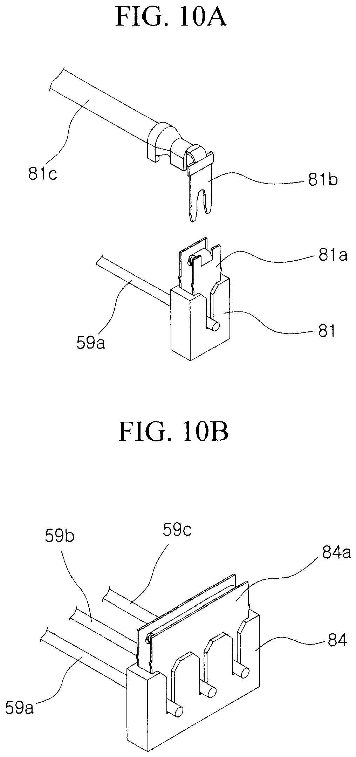

First, referring to FIG. 8, the terminal assembly holder 80 includes a number of coupling holes 85 so as to be combined with the division stator core assembly 2. Also, the terminal assembly holder 80 includes: a U-phase terminal housing 81 for connecting a U-phase terminal of a U-phase coil 59a that is wound on the division stator core assembly 2 with a U-phase lead wire 81c of FIG. 10A; a V-phase terminal housing 82 for connecting a V-phase terminal of a V-phase coil 59b that is wound on the division stator core assembly 2 with a V-phase lead wire (not shown); a W-phase terminal housing 83 for connecting a W-phase terminal of a W-phase coil 59c that is wound on the division stator core assembly 2 with a W-phase lead wire (not shown); and a common terminal housing 84 for mutually connecting the coils 59a-59c of the three phases of the U-phase, V-phase, and W-phase. When the respective housings 81, 82, 83, and 84 of the thus-constructed terminal assembly holder 80 are combined with the division stator core assembly 2, the housings 81, 82, 83, and 84 are disposed between the respective division stator cores 51 to then connect the coils. Accordingly, it is possible to manufacture a slim type motor 1, to thereby minimize height of the motor 1.

Hereinbelow, a method of manufacturing the stator 50 will be described with reference to FIGs. 7 through 10.

In this invention, in the case that the stator 50 employs a three-phase drive system, a successive winding is performed per each phase U, V, or W as a coil winding for a number of division stator cores 51', 51", and 51"'. In the case that a magnetic circuit of a motor is formed of a 36-slot-48-pole structure, for example, respective coils 59a-59c are successively wound on the twelve division stator cores 51', 51", and 51"' for each phase of U, V, and W, to thereby omit a connection work between the division stator cores on which the coils are wound per phase.

Then, the thirty-six division stator cores 51', 51", and 51"' on which the coils are wound are alternately arranged per each phase of U, V, and W as shown in FIG. 9 and coupling grooves A and coupling protrusions B of respective bobbins 54 for the adjoining division stator cores 51', 51", and 51"' are mutually coupled with each other as shown in FIG. 6, to thereby complete a division stator core assembly 2.

Thereafter, first and second coupling protrusions D that are provided at both ends of the lower portion of the inner and outer circumference surfaces of the division stator core 51 are combined with coupling holes 85 of the terminal assembly holder 80, respectively, to thereby combine the terminal assembly holder 80 for connecting coils 59a-59c with a part of the bottom surface of the division stator core assembly 2, as shown in FIGs. 7 and 8.

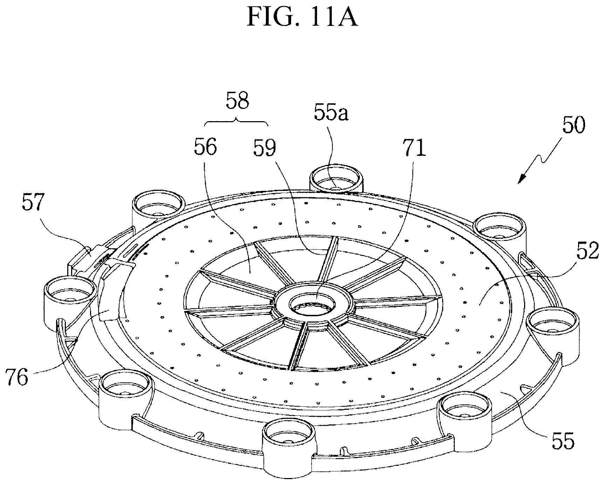

Then, U, V, and W lead wires connects with a wire holder 57 of FIG. 11A using terminal housings 81-83, are connected with one-end terminals of three coils 59a-59c that are consecutively wound on the twelve division stator cores 51', 51", and 51"' per phase, and U, V, and W coils are mutually connected with the other-end terminals of the three coils 59a-59c that are connected with the common terminal housing 84 into which a common terminal COMMON is inserted so as to form a neutral point NP.

Hereinbelow, a method of assembling the one-end terminals and the other-end terminals of three-phase U, V, and W coils 59a-59c will be described in detail with reference to FIGs. 10A and 10B.

FIG. 10A is a reference perspective view for explaining a U-phase terminal that is assembled with a U-phase terminal housing in the terminal assembly holder of FIG. 8.

Referring to FIG. 10A, a U-phase coil 59a that has been withdrawn as illustrated in FIG. 9 is inserted into the U-phase terminal housing 81. Then, a mag mate terminal 81a is inserted into a groove that is provided in the upper portion of the U-phase terminal housing 81 and an extra U-phase coil that do not need is cut. Then, a poke-in terminal 81b that is connected to the U-phase lead wire 81c is inserted into the mag mate terminal 81a, to then connect each other. In the same manner for V-phase and W-phase terminals, V-phase coil 59b and W-phase coil 59c are inserted into the terminal housings 82 and 83, respectively, and V-phase and W-phase lead wires are connected with the V-phase coil 59b and W-phase coil 59c, respectively.

FIG. 10B is a reference perspective view for explaining a method of forming a neutral point (NP) by using a common terminal housing that is installed in the terminal assembly holder.

Referring to FIG. 10B, the other-end terminals of the three-phase U, V, and W coils 59a-59c that have been withdrawn as illustrated in FIG. 9 are inserted into three grooves formed on the common terminal housing 84, respectively. When a mag mate terminal 84a for the common terminal is inserted into the common terminal housing 84, the other-end terminals of the three-phase U, V, and W coils 59a-59c are mutually connected with each other by the mag mate terminal 84a, to thus form a neutral point NP.

When termination processing of the three-phase U, V, and W coils 59a-59c is completed by using the terminal assembly holder 80 and housings 81-84, connection of the division stator core assembly 2 is accomplished on the terminal assembly holder 80 that has been inserted into the respective division stator cores 51, to thus form a stator of a slim type structure.

The division stator core assembly 2 whose connected has been completed as aforesaid, is molded by an insert molding method, to complete a stator holder 52 of FIG. 11A.

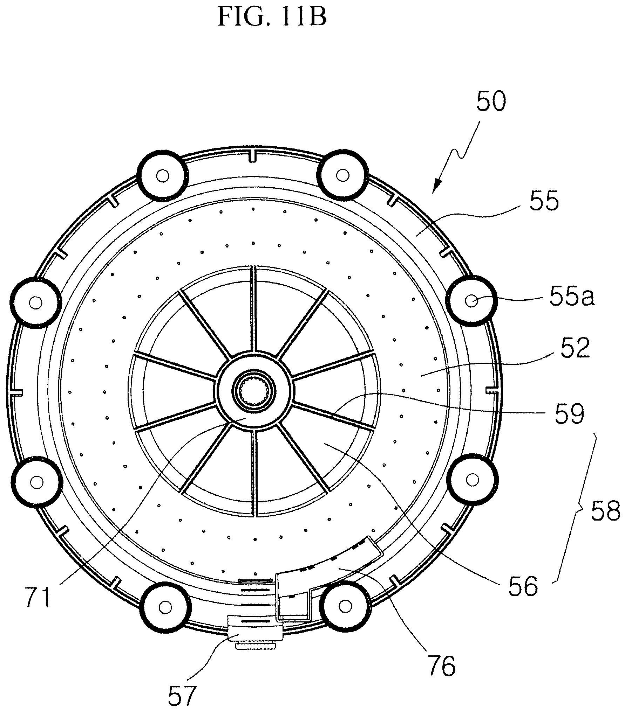

FIGs. 11A and 11B are a perspective view and a top plan view of a stator that is used in a slim type motor according to this invention, respectively.

Referring to FIGs. 11A and 11B, a stator 50 is integrally formed in an annular form by a stator holder 52 that is formed by insert molding a division stator core assembly 2 that is obtained by assembling a number of division stator cores 51 along the annular outer circumference of the number of division stator cores 51 using a thermosetting resin, as shown in FIG. 7. An outer side extension portion 55 is extensively formed forwards on the outer circumferential portion of the stator holder 52. A number of tub coupling units 55a are formed in the leading end portion of the annular outer extension portion 55. The annular outer extension portion 55 is coupled with the tub 40 through the number of tub coupling units 55a.

In addition, the rotating shaft support bearing 71 is disposed at the central portion of the stator 50. An inner extension portion 58 is axially extended in the stator holder 52. An inner side surface of the inner extension portion 58 is formed in a plate form, from a bearing holder surrounding the rotating shaft support bearing 71 to the stator holder 52 surrounding the division stator core assembly 2. A number of ribs 59 are radially disposed on the outer side surface of the inner extension portion 58. Weight reduction grooves 56 are formed in spaces between the ribs 59.

In this case, since the stator holder 52 and the inner extension portion 58 in the stator 50 are realized in a slim form as shown in FIG. 3A, so that no portions on the outer side surface of the inner extension portion 58are protruded from a vertical line, they are organically assembled with the slim type rotor 60. Accordingly, the whole motor has a slim type structure.

In addition, a wire holder or a terminal block 57 is provided on the outer circumference of the outer extension portion 55. The wire holder or the terminal block 57 is formed to externally withdraw three-phase lead wires that have been withdrawn from the inner terminal assembly holder 80. A hall IC assembly 76 that generates a position signal for detecting position of a rotor 60 that rotates in order to control a current supply for the coils of stator 50 employing a three-phase drive system is formed in the neighborhood of the wire holder or the terminal block 57.

The stator 50 is directly coupled with the tub 40 or the support bracket 45, and plays a role of a cover surrounding the outer portion of the motor 1. The rotating rotor 60 is inserted into the inside of the stator 50, and no rotating body exists in the outside of the stator 50. Accordingly, stability of the motor 1 is enhanced. In addition, since the stator 50 covers the rotating rotor 60, the stator 50 plays a role of reducing level of noise that is generated during rotation of the rotor 60.

If the respective division stator cores 51 are insert molded with a Bulk Molding Compound (BMC) except the division cores 53 that have been exposed the outside of the respective division stator cores 51, in order to cover spaces between the respective division stator core assemblies 2, the upper/lower wound coil portions, the bobbins 54, to thereby obtain an annular built-in type stator 50.

Another thermosetting resin can be used other than the BMC for the insert molding.

### C. Structure of rotor and process of manufacturing the rotor

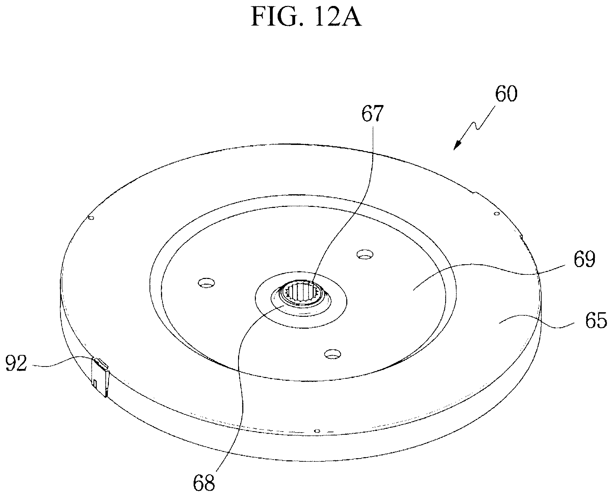

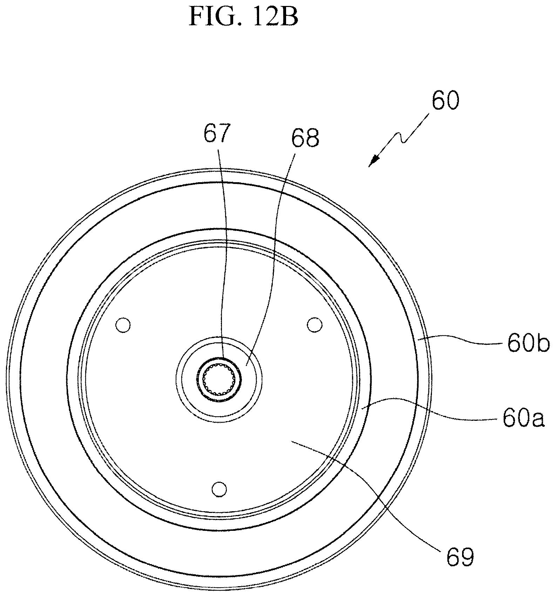

FIGs. 12A and 12B are a perspective view and a bottom plan view of a rotor that is used in a slim type motor according to this invention, respectively.

Referring to FIGs. 12A and 12B, a rotor 60 is manufactured by an insert molding method with a thermosetting resin, for example, BMC (Bulk Molding Compound), at a state where an involute serration bushing 67 is disposed on an injection molding mold so as to be substantially positioned at the center of the inner rotor 60a and the outer rotor 60b.

The inner rotor 60a and the outer rotor 60b are connected by a rotor holder 65 made of a thermosetting resin so as to maintain a state where a number of magnets 63 and 62 are arranged on the ring-shaped yokes 61 and 64 as illustrated in the cross-sectional view of FIG. 3A. As a result, a trench style groove 65a into which a leading portion of the stator 50 is inserted is formed between the inner rotor 60a and the outer rotor 60b.

In addition, the rotor holder 65 is integrally connected with a bushing support portion 68 whose leading portion supports the bushing 67 through a slant connection portion 69 that is extended toward the center of gravity of the rotor 60. The outer side surface of the slant connection portion 69 is made of a flat surface. A number of ribs whose thickness is gradually decreased from the outer side of the ribs to the central direction of the ribs are rad ially disposed on the inner side sur face of the slant connection portion 69. As a result, the rotor 60 has a slim type structure that intercepts thickness of the rotor 60 from being increased to the axial direction, and can minimize vibration occurring when the rotor 60 rotates.

Therefore, the rotor holder 65 includes: a trench formation portion 65b that forms a trench style groove 65a that surrounds upper/lower surfaces exclusive of surfaces respectively facing a number of magnets 63 and 62 in the inner rotor 60a and the outer rotor 60b and outer circumference portions of ring-shaped yokes 61 and 64, in which a leading end of the stator 50 is inserted between the inner rotor 60a and the outer rotor 60b; a slant connection portion 69 that is slanted to the center of gravity of the rotor 60 from the trench formation portion 65b; and a bushing holder 68 that holds a bushing 67 therein and with the outer circumference portion of which a leading end of the slant connection portion 69 is connected.

Referring to FIG. 3A, in the case of the double rotor 60, the inner rotor 60a is formed by alternately arranging a number of magnets 63 that are respectively magnetized into a N-pole and a S-pole on the outside of the annular inner yoke 64 using adhesives, and the outer rotor 60b is formed by alternately arranging a number of magnets 62 that are respectively magnetized into a N-pole and a S-pole on the inside of the annular outer yoke 61 using adhesives. In this case, the magnets facing in the inner rotor 60a and the rotor 60b are arranged to have a reverse polarity to each other.

In addition, the magnets of the inner rotor 60a and the outer rotor 60b can be integrally fabricated into an internal pattern that can be fixedly positioned on a mold without using a separate adhesion process.

At the time of performing the insert molding, the outer side surfaces of the inner rotor 60a and the outer rotor 60b are molded in an annular form except the facing surfaces of the facing magnets.

Also, since a number of magnets 63 and 62 of the inner rotor 60a and the outer rotor 60b are arranged in a concentric circle by an insert molding method, a roundness of the rotor 60 becomes high, to thus be capable of maintaining a uniform magnetic gap when the rotor 60 is assembled with the stator 50.

Therefore, as described above, the rotor 60 and the stator 50 are designed into a slim type in this invention, respectively. Accordingly, overall thickness that is, height of a motor 1 can be reduced by mixing a slim type structure of the rotor 60 and the stator 50 in combination. It is possible to manufacture a motor 1 to have a thickness of 25mm or below, according to a preferred embodiment of the present invention.

In addition, in this invention, cores of the stator 50 are manufactured into perfect division stator cores in order to enhance a coil winding workability. Further, the double rotor 60 is employed in the present invention, to thereby enhance an efficiency of the magnetic circuit.

Moreover, in this invention, the magnetic circuit is designed in a manner of increasing the number of slots that is, division cores and the number of poles that is, magnets by increasing diameters of the rotor and the stator without reducing size of the respective magnets, to thereby lower a space factor of coils between a core and another. As a result, a terminal assembly holder 80 and housings 81-84 necessary to withdraw coils to the outside through the wire holder 57 from the three-phase coil terminals are arranged in a space between a division core and another. Accordingly, a termination processing of the coil 59a-59c is performed. A successive winding method is applied for division cores per each phase, to thereby remove connection of coils between the division cores, and to thus be capable of implementing the stator into a slim type structure.

In addition, in this invention, in spite of the slim type structure of the rotor and stator in the present invention, the number of slots that is, division cores and the number of poles that is, magnets are increased by increasing diameters of the rotor and the stator without reducing size of the respective magnets and division cores, to thereby implement a double-rotor/single-stator structure. Accordingly, in comparison with a general large-capacity motor of a single-rotor/single-stator structure, an efficiency and torque of the motor can be further increased.

As a result, in the case of a general motor of a single-rotor/single-stator structure, the maximum torque is 32 Nm, and the motor efficiency is 27.6%. However, the motor of the present invention has a slim type structure, and exhibits a high driving torque of the maximum torque of 42 Nm and a high efficiency of 44%. Therefore, the slim type motor of this invention has a talk enough for a quick inversion drive of the drum-washing machine.

In addition, this invention can provide a slim type motor that is embodied into thickness or height of about 25mm or below, and thus can embody a direct drive DD apparatus that is employed in a motor installation space that is given in the inside of a built-in type medium-size/small-size drum-washing machine, to thus rotationally drive a basket in the inside of the tub in a direct drive DD manner.

In addition, since the division stator core 51 is small, a waste rate of a silicon steel plate is smaller than that of a built-in type stator core structure. Accordingly, there is little material loss. Further, since shape of the division stator core 51 is simple, it is easy to manufacture the division stator core 51.

Moreover, since the rotor and the stator are formed of a built-in type structure by using resins in the above-described embodiments of the present invention, they are of an excellent durability and an excellent moisture-proof performance. Accordingly, the rotor and the stator according to the above-described embodiments of the present invention are appropriate for a drum drive source of a washing machine that is used under a high humidity environment, but are not limited thereto. In addition, it is possible to modify a structure of mounting a stator according to an apparatus employing a motor.

Moreover, since the stator 60 plays a role of a cover with respect to the outside of the motor 1, a separate cover is not needed. Accordingly, the motor can be made in a slim type structure. In addition, a hall sensor 91 is inserted into the stator 50 and the magnets 92 are disposed in the rotating rotor 60, to thus easily realize a top loading drive.

In the above-described embodiments of the present invention, the case where the stator having the cover-integrated structure is formed of a division core structure for prevention of noise has been described, but it is possible to manufacture a stator having a cover-integrated structure in which a coil is wound on a built-in type core and an inner extension portion and an outer extension portion are extended on the built-in type core, respectively.

In addition, in the above-described embodiments of the present invention, the case where the motor, that is, the stator is driven by a three-phase drive system has been described, but it is possible for one skilled in the art to modify the motor, that is, the stator so as to be driven by a two-phase drive system.

Moreover, in the above-described embodiments of the present invention, the case where the stator having a cover-integrated structure for prevention of noise is combined with a double-rotor including inner and outer rotors has been described, but the present invention is not limited thereto. That is, it is possible to make a motor by combining a cover-integrated stator with an inner rotor or an outer rotor.

As described above, a direct drive apparatus for use in a built-in type drum-washing machine according to the present invention is installed in an allowable 25mm space without reducing size of a tub that relates with a wash capacity in a built-in type medium-size/small-size drum-washing machine, to thereby make a basket in the inside of the tub rotate in a direct drive mode.

In addition, the present invention enables a number of division core assemblies to be assembled by injection molding a number of division cores with thermosetting resin in which a bobbin coupling structure and a successive coil winding are used but a separate core holder plate is not used, to thereby embody a slim type stator.

In addition, this invention provides an effect of enabling a stable motor drive by minimizing an axial height of a motor suitable to be installed in a built-in drum-washing machine whose motor accommodation space is narrow, and another effect of driving a motor so as to be suitable for a drum-washing machine that acts by a quick inversion method since a torque is high.

In addition, this invention provides an effect of enabling a motor to be applied to a slant type drum-washing machine although a slant angle of the slant type drum-washing machine becomes large, by minimizing an axial height of the motor.

Further, a stator according to the present invention has an outer-stator structure in which the stator is disposed in the outer side of a motor, that is, a cover-integrated structure, to thus interrupt noise generated from a rotating rotor therein from externally leaking and provide an effect of reducing a noise level. In addition, the present invention may be contributed to make a motor in a slim structure since a stator has a cover structure of the motor and thus a separate cover is not needed.

Further, since a stator that is covered at the outer side of a tub for use in a drum-washing machine does not rotate in an exposure state, the present invention provides an excellent effect in view of a stability.

In addition, a rotating rotor is disposed in the inside of a motor and the stator that faces the rotor is disposed in the outside of the motor in a cover-integrated structure, and simultaneously a bearing for supporting a rotating shaft is incorporated in the stator, the present invention provides an effect of reducing the number of the rotating shaft support bearing into one, and realizing thickness of a rear surface of a tube in a slim structure.

This invention can provide a slim type motor that is embodied into thickness or height of about 25mm or below. Accordingly, the slim type motor can be applied to a direct drive (DD) apparatus that is employed in a built-in type medium-size/small-size drum-washing machine.

In addition, the slim type motor according to the present invention can be applied to a direct drive (DD) apparatus that is employed in a large-capacity drum-washing machine as well as a built-in type medium-size/small-size drum-washing machine.

## Claims

1. A stator (50) having a cover-integrated structure that is applied to a direct drive apparatus for use in a drum-washing machine, the stator (50) comprising:
a division stator core assembly (2) in which coils (59) are successively wound per phase on a number of division cores (53) on respective outer circumferences of which bobbins (54) are formed and adjoining division core bobbins (54) are mutually coupled with each other and assembled in an annular form; and
a stator holder (52) that is selectively formed on and integrated with the outer portion of the division type stator core assembly (2),
wherein the stator holder (52) further comprises an inner extension portion (58) that is axially extended and to the center of gravity of which one end of a rotating shaft (70) is rotatably supported; and an outer extension portion (55) that is extended forwards from the outer circumference of the stator holder (52) and that is fixedly combined with a tub (40) of the drum-washing machine,
**characterized in**
**that** the stator holder (52) and the outer extension portion (55) form a cover surrounding a rotor (60) which is disposed between the stator (50) and the tub (40).

2. The stator for a direct drive apparatus for use in a drum-washing machine, according to claim 1, further comprising a terminal assembly holder (80) that comprises: first through third terminal housings (81-83) that are arranged between the number of the division stator cores (53) and that are used to connect respective one-side coil terminals of the three-phase coils (59a-59c) and respective outer withdrawal lead wires (81c) of the three phases; and a common terminal housing (84) that is used to form a neutral point (NP) by inter-connecting the other-side coil terminals of the respective three-phase coils.

3. The stator for a direct drive apparatus for use in a drum-washing machine, according to claim 1 or 2, wherein each bobbin (54) comprises: first and second flanges (54a, 54b) that are formed at one side of the bobbin (54) and the other side thereof, respectively; and a coupling protrusion (B) and a coupling groove (A) are mutually combined with bobbins (54) that are respectively adjoined at either side end of the first flange (54a) that is disposed at the inside of the stator core assembly during assembling the stator core assembly (2), and
wherein the first and second flanges (54a, 54b) comprise first and second coupling protrusions (D) with which terminal assembly holders (80) are coupled at the center of the lower end of the first and second flanges (54a, 54b).

4. The stator for a direct drive apparatus for use in a drum-washing machine, according to one of claims 1 to 3, wherein the inner extension portion (58) further comprises a support bearing (71) that rotatably supports one end of the rotating shaft (70) that is coupled with the rotor (60) to the center of gravity of the inner extension portion (58).

5. A direct drive apparatus for use in a drum-washing machine, the direct drive apparatus comprising:
a rotating shaft (70) whose one end is rotatably combined with a tub (40) of the drum-washing machine and on the leading end of which a basket (30) is fixedly combined;
a rotor (60) at the center portion of which the rotating shaft (70) is combined; and
a stator (50) in which a stator holder (52) is formed on the outer circumference of a stator core assembly (2) that is assembled in an annular form by winding coils (59) on a number of division cores (53) on an outer circumference of each of which an insulation bobbin (54) is integrally formed, and that enables the rotor (60) to be rotationally driven,
wherein the stator holder (52) further comprises: an inner extension portion (58) that is axially extended and to the center of gravity of which the other end of the rotating shaft (70) is rotatably supported; and an outer extension portion (55) that is extended forwards from the outer circumference of the stator holder (52) and that is fixedly combined with the tub (40),
**characterized in**
**that** the stator holder (52) and the outer extension portion (55) form a cover surrounding the rotor (60) which is disposed between the stator (50) and the tub (40).

6. The direct drive apparatus for use in a drum-washing machine, according to claim 5, wherein the rotor (60) has one of a double rotor structure, an inner rotor structure, and an outer rotor structure.

7. The direct drive apparatus for use in a drum-washing machine, according to claim 5, further comprising: a first support bearing (73, 75) that is installed in the tub (40) and supports one end of the rotating shaft (70), and a second support bearing (71) that is installed at the center of gravity of the inner extension portion (58) of the stator holder (52) and rotatably supports the other end of the rotating shaft (70).

8. The direct drive apparatus for use in a drum-washing machine, according to claim 5, further comprising a disc-shaped support bracket (45) that is coupled with and fixed to the rear surface of the tub (40), and on the outer surface of which a number of coupling fixing protrusions (45a) are protruded, wherein a number of coupling fixing portions (55a) that are coupled with the coupling fixing protrusions (45a) are integrally formed in the outer extension portion (55) of the stator (50).

## Patentansprüche

1. Stator (50), der einen Aufbau mit integrierter Abdeckung hat und bei einer Direktantriebs-Vorrichtung zum Einsatz in einer Trommelwaschmaschine angewendet wird, wobei der Stator (50) umfasst:
eine unterteilte Statorblech-Baugruppe (2), in der Wicklungen (59) aufeinanderfolgend nach Phase auf eine Anzahl unterteilter Bleche (53) gewickelt sind, an deren Außenumfang jeweils Wicklungsträger (54) ausgebildet sind, und Wicklungsträger (54) benachbarter unterteilter Bleche miteinander gekoppelt und in einer Ringform zusammengesetzt sind; sowie
einen Stator-Träger (52), der selektiv an dem äußeren Abschnitt der unterteilten Statorblech-Baugruppe (2) ausgebildet ist und eine integrale Einheit damit bildet,
wobei der Stator-Träger (52) des Weiteren einen inneren Erweiterungsabschnitt (58), der sich axial erstreckt und an dessen Schwerpunkt ein Ende einer Drehwelle (70) drehbar gelagert ist, sowie einen äußeren Erweiterungsabschnitt (55) umfasst, der sich von dem Außenumfang des Stator-Trägers (52) nach vorn erstreckt und fest mit einem Laugenbehälter (40) der Trommelwaschmaschine verbunden ist,
**dadurch gekennzeichnet, dass**
der Stator-Träger (52) und der äußere Erweiterungsabschnitt (55) eine Abdeckung bilden, die einen Rotor (60) umschließt, der zwischen dem Stator (50) und dem Laugenbehälter (40) angeordnet ist.

2. Stator für eine Direktantriebs-Vorrichtung zum Einsatz in einer Trommelwaschmaschine nach Anspruch 1, der des Weiteren einen Anschlussbaugruppen-Träger (80) umfasst, der ein erstes bis drittes Anschlussgehäuse (81-83), die zwischen der Anzahl der unterteilten Statorbleche (53) angeordnet sind und dazu dienen, jeweilige Wicklungs-Anschlüsse einer Seite der Dreiphasen-Wicklungen (59a-59c) und jeweilige Ableitdrähte (81c) der drei Phasen zu verbinden, sowie eine Erdungsanschluss-Aufnahme (84) umfasst, die dazu dient, durch Verbinden der Wicklungs-Anschlüsse der anderen Seite der jeweiligen Dreiphasen-Wicklungen miteinander einen Neutralpunkt (NP) zu bilden.

3. Stator für eine Direktantriebs-Vorrichtung zum Einsatz in einer Trommelwaschmaschine nach Anspruch 1 oder 2, wobei jeder Wicklungsträger (54) einen ersten und einen zweiten Flansch (54a, 54b) umfasst, die an einer Seite des Wicklungsträgers (54) bzw. an seiner anderen Seite ausgebildet sind, und ein Kopplungs-Vorsprung (B) sowie eine Kopplungs-Aussparung (A) wechselseitig kombiniert mit Wicklungsträgern (54) ausgebildet sind, die beim Zusammensetzen der Statorblech-Baugruppe (2) jeweils an den Enden beider Seiten des ersten Flansches (54a) aneinandergrenzen, der an der Innenseite der Statorblech-Baugruppe angeordnet ist, und
wobei die ersten und die zweiten Flansche (54a, 54b) erste und zweite Kopplungs-Vorsprünge (D) umfassen, mit denen Anschluss Baugruppen-Träger (80) in der Mitte des unteren Endes der ersten und der zweiten Flansche (54a, 54b) gekoppelt werden.

4. Stator für eine Direktantriebs-Vorrichtung zum Einsatz in einer Trommelwaschmaschine nach einem der Ansprüche 1 bis 3, wobei der innere Erweiterungsabschnitt (58) des Weiteren ein Stützlager (71) umfasst, das ein Ende der Drehwelle (70), das mit dem Rotor (60) gekoppelt ist, an dem Schwerpunkt des inneren Erweiterungsabschnitts (58) drehbar lagert.

5. Direktantriebs-Vorrichtung zum Einsatz in einer Trommelwaschmaschine, wobei die Direktantriebs-Vorrichtung umfasst:
eine Drehwelle (70), deren eines Ende drehbar mit einem Laugenbehälter (40) der Trommelwaschmaschine verbunden ist und an deren vorderem Ende eine Trommel (30) fest angebracht ist;
einen Rotor (60) an dessen Mittelabschnitt die Drehwelle (70) angebracht ist; und
einen Stator (50), in dem ein Stator-Träger (52) an dem Außenumfang einer Statorblech-Baugruppe (2) ausgebildet ist, die in einer Ringform zusammengesetzt wird, indem Wicklungen (59) auf eine Anzahl unterteilter Bleche (53) gewickelt werden, an deren Außenumfang jeweils ein isolierender Wicklungsträger (54) integral ausgebildet ist, und der drehendes Antreiben des Rotors (60) ermöglicht,
wobei der Stator-Träger (52) des Weiteren einen inneren Erweiterungsabschnitt (58), der sich axial erstreckt und an dessen Schwerpunkt das andere Ende einer Drehwelle (70) drehbar gelagert ist, sowie einen äußeren Erweiterungsabschnitt (55) umfasst, der sich von dem Außenumfang des Stator-Trägers (52) nach vorn erstreckt und fest mit dem Laugenbehälter (40) verbunden ist,
**dadurch gekennzeichnet, dass**
der Stator-Träger (52) und der äußere Erweiterungsabschnitt (55) eine Abdeckung bilden, die den Rotor (60) umschließt, der zwischen dem Stator (50) und dem Laugenbehälter (40) angeordnet ist.

6. Direktantriebs-Vorrichtung zum Einsatz in einer Trommelwaschmaschine nach Anspruch 5, wobei der Rotor (60) einen Doppelrotor-Aufbau, einen Innenrotor-Aufbau oder einen Außenrotor-Aufbau hat.

7. Direktantriebs-Vorrichtung zum Einsatz in einer Trommelwaschmaschine nach Anspruch 5, der des Weiteren ein erstes Stützlager (73, 75), das in dem Laugenbehälter (40) installiert ist und ein Ende der Drehwelle (70) lagert, sowie ein zweites Stützlager (71) umfasst, das an dem Schwerpunkt des inneren Erweiterungsabschnitts (58) des Stator-Trägers (52) installiert ist und das andere Ende der Drehwelle (70) drehbar lagert.

8. Direktantriebs-Vorrichtung zum Einsatz in einer Trommelwaschmaschine nach Anspruch 5, die des Weiteren einen scheibenförmigen Träger (45) umfasst, der mit der Rückseite des Laugenbehälters (40) gekoppelt und daran befestigt ist und an dessen Außenfläche eine Anzahl von Kopplungs-Befestigungsvorsprüngen (45a) vorstehen, wobei eine Anzahl von Kopplungs-Befestigungsabschnitten (55a), die mit den Kopplungs-Befestigungsvorsprüngen (45a) gekoppelt sind, integral an dem äußeren Erweiterungsabschnitt (55) des Stators (50) ausgebildet sind.

## Revendications

1. Stator (50) disposant d'une structure intégrée à un couvercle appliqué à un dispositif d'entraînement direct à utiliser dans un lave-linge à tambour, le stator (50) comprenant :
un ensemble de noyaux de stator de division (2) dans lequel des spires (59) sont enroulées successivement par phase sur un nombre de noyaux de division (53) sur des circonférences extérieures respectives dont les bobines (54) sont constituées et des bobines de noyaux de division adjacentes (54) sont couplées mutuellement l'une à l'autre et assemblées dans une forme annulaire ; et
un support de stator (52) sélectivement constitué sur et intégré à la partie extérieure de l'ensemble de noyaux de stator de type à divisions (2),
dans lequel le support de stator (52) comprend en outre une partie d'extension intérieure (58) étendue sur un axe et vers le centre de gravité de laquelle une extrémité d'un arbre rotatif (70) est soutenue dans sa rotation ; et une partie d'extension extérieure (55) étendue en s'éloignant de la circonférence extérieure du support de stator (52) et qui est combinée de manière fixe à une cuve (40) du lave-linge à tambour,
**caractérisé en ce**
**que** le support de stator (52) et la partie d'extension extérieure (55) forment un couvercle entourant un rotor (60) placé entre le stator (50) et la cuve (40).

2. Le stator destiné à un dispositif à entraînement direct à utiliser dans un lave-linge à tambour, selon la revendication 1, comprenant en outre un support d'assemblage terminal (80) qui comprend : un premier à un troisième logements terminaux (81-83) disposés entre le nombre de noyaux de stator de division (53) et utilisés pour connecter des bornes de spire placées d'un côté respectives des bobines triphasées (59a-59c) et des fils conducteurs à retrait vers l'extérieur respectifs (81c) des trois phases ; et un logement de bornes commun (84) utilisé pour constituer un point neutre (PN) en interconnectant les bornes de bobine placées de l'autre côté des bobines triphasées respectives.

3. Le stator destiné à un dispositif à entraînement direct à utiliser dans un lave-linge à tambour, selon la revendication 1 ou 2, dans lequel chaque bobine (54) comprend : une première et une deuxième brides ((54a, 54b) formées sur un côté de la bobine (54) et l'autre côté de celle-ci, respectivement ; et un épaulement de couplage (B) et une rainure de couplage (A) sont mutuellement combinés à des bobines (54) respectivement adjacentes à l'une ou l'autre extrémité latérale de la première bride (54a) disposée à l'intérieur de l'ensemble de noyaux de stator pendant l'assemblage de l'ensemble de noyaux de stator (2), et
dans lequel les première et deuxième brides (54a, 54b) comprennent des premier et deuxième épaulements de couplage (D) avec lesquels des supports d'assemblage de bornes (80) sont couplés au centre de l'extrémité inférieure des première et deuxième brides (54a, 54b).

4. Le stator destiné à un dispositif à entraînement direct à utiliser dans un lave-linge à tambour, selon une des revendications 1 à 3, dans lequel la partie d'extension intérieure (58) comprend en outre un roulement de soutien (71) qui soutient dans sa rotation une extrémité de l'arbre rotatif (70) couplé au rotor (60) sur le centre de gravité de la partie d'extension intérieure (58).

5. Dispositif à entraînement direct à utiliser dans un lave-linge à tambour, le dispositif à entraînement directe comprenant :
un arbre rotatif (70) dont une extrémité est combinée dans sa rotation à une cuve (40) du lave-linge à tambour et sur l'extrémité avant duquel un panier (30) est combiné de manière fixe ;
un rotor (60) dans la partie centrale duquel l'arbre rotatif (70) est combiné ;
et
un stator (50) dans lequel un support de stator (52) est formé sur la circonférence extérieure d'un ensemble de noyaux de stator (2) assemblé dans une forme annulaire par enroulement de spires (59) sur un nombre de noyaux de division (53) sur une circonférence extérieure dont chacun de ceux-ci forme intégralement une bobine d'isolation (54), et qui permet au rotor (60) d'être entraîné de manière rotative,
dans lequel le support de stator (52) comprend en outre : une partie d'extension intérieure (58) étendue sur un axe et vers le centre de gravité de laquelle l'autre extrémité de l'arbre rotatif (70) est soutenue dans sa rotation ; et une partie d'extension extérieure (55) étendue en s'éloignant de la circonférence extérieure du support de stator (52) et qui combinée de manière fixe à une cuve (40),
**caractérisé en ce**
**que** le support de stator (52) et la partie d'extension extérieure (55) forment un couvercle entourant un rotor (60) qui est placé entre le stator (50) et la cuve (40).

6. Le dispositif d'entraînement direct à utiliser dans un lave-linge à tambour, selon la revendication 5, dans lequel le rotor (60) présente une d'une structure de rotor double, une structure de rotor intérieure, et une structure de rotor extérieure.

7. Le dispositif d'entraînement direct à utiliser dans un lave-linge à tambour, selon la revendication 5, comprenant en outre : un premier roulement de soutien (73, 75) qui est installé dans la cuve (40) et soutient une extrémité de l'arbre rotatif (70), et un deuxième roulement de soutien (71) qui est installé sur le centre de gravité de la partie d'extension intérieure (58) du support de stator (52) et soutient dans sa rotation l'autre extrémité de l'arbre rotatif (70).

8. Le dispositif d'entraînement direct à utiliser dans un lave-linge à tambour, selon la revendication 5, comprenant en outre un support de soutien en forme de disque (45) couplé et fixé à la surface arrière de la cuve (40), et sur la surface extérieure duquel un nombre de fixations saillantes de couplage (45a) dépassent, dans lequel un nombre de parties de fixation de couplage (55a) couplées aux fixations saillantes de couplage (45a) sont intégralement formées au sein de la partie d'extension extérieure (55) du stator (50).
